# EUROPÄISCHE PATENTSCHRIFT

(11) **EP 1 520 467 B1**
(45) Veröffentlichungstag und Bekanntmachung des Hinweises auf die Patenterteilung: **09.01.2008**
(21) Anmeldenummer: 04023542.6
(22) Anmeldetag: 02.10.2004
(51) Int. Cl.: A01G 9/12

(54) **Verstellbare Pflanzenstütze**
Adjustable plant support
Support de plantes adaptables

(30) Priorität: 02.10.2003 DE 10346191; 02.10.2003 DE 20315412 U
(43) Veröffentlichungstag der Anmeldung: 06.04.2005
(73) Patentinhaber: Horst Howest GmbH Importe - Vertretungen, 48268 Greven (DE)
(72) Erfinder: Howest, Horst, 48268 Greven (DE)
(74) Vertreter: Triebold, Klaus-Jörg

(56) Entgegenhaltungen:
- CH-A- 237 335
- DE-U- 8 711 043
- DE-U- 20 301 544
- DE-U- 20 315 412
- FR-A- 2 767 576
- GB-A- 2 310 581
- US-A- 1 359 388
- US-A- 4 285 163
- US-A- 5 249 390

## Beschreibung

Die Erfindung betrifft eine Pflanzenstütze gemäß dem Oberbegriff des Anspruchs 1. Während der Wachstumsphase benötigen Pflanzen Stützvorrichtungen, um sie vor dem Umfallen und Umwehen zu schützen. Ein einfacher Stab an den der Stamm oder Stängel der Pflanze gebunden wird, ist bei Pflanzen mit mehreren Stängeln oder Sträuchern mit einem voluminöseres Astwerk dazu nicht genügend, da die Pflanze dabei insgesamt umfasst werden muss. Durch eine solche Umfassung während der Wachstumsphase kann zudem eine gewünschte Wachstumsrichtung der Triebe vorgegeben werden. Außerdem können durch eine solche Umfassung die tiefer liegenden Äste und Triebe hochgedrückt und dadurch eine unerwünschte Abschattung umstehender, kleinerer Gewächse verhindert.

Aus dem Stand der Technik bekannt sind Pflanzenstützen, die aus einem einteiligen in etwa U-förmigen Drahtbügel bestehen, der umgekehrt neben der Pflanze in den Boden gesteckt wird. Einen solchen Bügel beschreiben DE 8711043 U1 und DE 233845 A1. Nachteilig an diesen Ausführungen ist, dass sie von der Größe an das Wachstum der Pflanze nicht angepasst werden können. Allenfalls können mehrere solcher Stützen rings um nebeneinander gesteckt werden, um größere Pflanzen zu umfassen.

Ebenfalls sind als Stand der Technik verstellbare Pflanzenstützen bekannt, bei in denen an einem relativ großen und massiven Haltestab in der Höhe und Länge feststellbare Gürtel- oder Draht-Schlaufen angebracht sind. Solche Pflanzenstützen beschreiben ua. DE 3009354 A1 und DE 20015761 U1. Diese Stützen lassen sich zwar über einen großen Wachstumsbereich der Pflanze anwenden, gerade bei kleinerem und mittlerem Wuchs der Pflanzen ist diese Konstruktion jedoch zu aufwändig und kostenintensiv. Zudem muss der relativ große Haltestab schon wegen seines Eigengewichts entsprechend tief ins Erdreich eingeschlagen werden, was den Aufwand beim Einbringen oder Versetzen der Stütze vergrößert, weil ggf. ein Hammer oder ähnliches Werkzeug erforderlich ist.

GB-A-2310581 und US-A-5249390 beschreiben Pflanzenstützen, die aus rechtwinkelig abgewinkelten Metalldrahtstäben bestehen. Diese sind an einem Ende zu Haken und Ösen gebogen und lassen sich dort durch Ineinanderhaken miteinander verbinden und zu mehreren verketten. Zur Änderung der Umfangs müssen bei diesen Stützen aber alle oder mehrere Stäbe wieder auseinandergehakt und einzeln aus dem Erdreich herausgezogen werden und nach einfügen zusätzlicher Stäbe wieder erneut einzeln eingestochen und miteinander verhakt werden. Hiervon unterscheidet sich in der Gegenstand des Anspruchs 1 noch dadurch, dass die Enden der Metalldrahthaltestäbe mittels einer Schraubverbindung oder einem Gelenkstück beweglich, durch Anziehen von Klemmschrauben fixierbar, direkt zweiteiligen oder durch weitere gebogenen Verbindungsstücke miteinander verbunden sind. Dadurch kann er in einem Stück herausgezogen, verstellt und sodann in einem Stück wieder ins Erdreich eingestochen werden.

US-A-1359388 und US-A-4285163 beschreiben ebenfalls Pflanzenstützen aus abgewinkelten und ineinander verhakten Metalldrahtstäben. Beide lassen sich aber nicht an den Wuchs der Pflanze anpassen, da sie im Umfang nicht verstellbar sind.

CH-A-237335 beschreibt eine Pflanzenstütze aus zwei Holzlatten, die direkt oder über zwei weitere Holzlatten mittels Schraubgelenken miteinander verbunden sind. Diese Schraubgelenke lassen jedoch nur ein Verstellung in der Vertikalen zu und dienen der platzsparenden Aufbewahrung durch ein Zusammenklappen der Stütze. Eine Anpassung des Halteumfangs ist damit nicht möglich. Zudem hat diese für sich allein keine die Pflanze haltende und umfassende Funktion, vielmehr muss die Pflanze daran mit Schnüren oder Bändern angebunden werden.

Ausgehend vom bisherigen Stand der Technik liegt der vorliegenden Erfindung die Aufgabe zugrunde, eine einfache und kostengünstige Konstruktion für eine Pflanzenstütze zu schaffen, die gleichwohl in weitem Umfang verstellbar ist und damit dem Wachstum der Pflanze angepasst werden kann.

Diese Aufgabe wird durch eine Pflanzenstütze mit den Merkmalen des Anspruch 1 gelöst. Weitere vorteilhafte Ausgestaltungen sind in den Unteransprüchen beschrieben. Durch die zweiteilige Konstruktion der Stütze bestehend aus zwei Metalldrahthaltestäben werden diese mit einer Schraubverbindung oder einem Gelenkstück verbunden. Durch die Biegungen können sie einen Teil- bzw. Vollkreis bilden, dessen Durchmesser durch die bewegliche Schraub- bzw. Gelenkverbindung in weitem Umfang eingestellt und dadurch dem Wuchs der Pflanze genau angepasst wird. Durch Festziehen der Klemmschrauben wird die Pflanzenstütze so dann wieder formstabil und standsicher fixiert. Durch Einfügen eines oder mehrerer bogenförmiger Verbindungsstücke zwischen die Metalldrahthaltestäbe kann der Umfang des Haltekreises noch weiter vergrößert werden und auch sehr breitwüchsige Pflanzen davon umfasst werden. Die Handhabung ist einfach, da nach Einstellung des gewünschten Kreisumfanges und Fixierung desselben durch Festziehen der Klemmschraube die Stütze von Hand mit den beiden geraden Schenkeln neben die Pflanze ins Erdreich gesteckt wird.

Durch diese Verstellmöglichkeit ist die Stütze wesentlich flexibler einzusetzen, als diejenigen, die nur aus einem einteiligen Drahtbügel besteht. Die Stütze kann dem Wuchs der Pflanze durch einfaches Herausziehen, Verstellen und neu Einstechen angepasst werden, ohne dass weitere Stützen angeschafft werden müssen.

Durch Einfügen der Verbindungsstücke kann die Stütze noch weiter angepasst werden. Da die Stütze aber im Wesentlichen ebenfalls nur aus einfachen Drahtelementen besteht, kann sie wiederum kostengünstiger hergestellt und einfacher angewandt werden, als diejenigen, die mit einem großen Haltestab und einen verstellbaren Gürteln- bzw. Drahtschlaufen arbeiten. Durch den zweiteiligen Aufbau kann in die Stütze im Falle der Beschädigung eines Haltestabes zudem kostengünstig repariert werden.

Ein Ausführungsbeispiel der Erfindung ist in den Zeichnungen dargestellt und im Folgenden näher beschrieben.

Es zeigen:

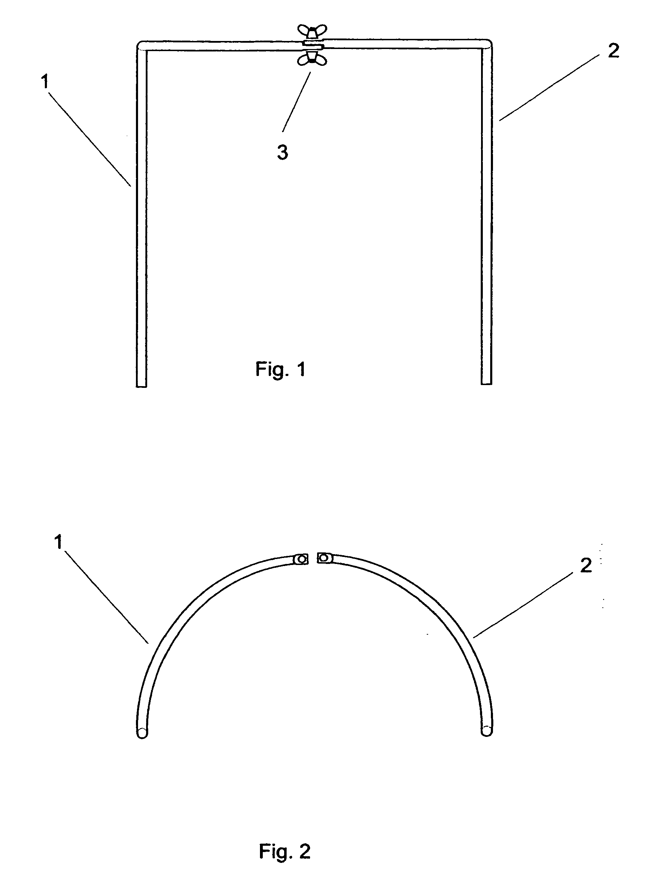

- Fig. 1: die Pflanzenstütze mit Verschraubung in seitlicher Ansicht;
- Fig. 2: die Pflanzenstütze in Aufsicht mit den Bohrungen ohne die Verbindungsverschraubung;

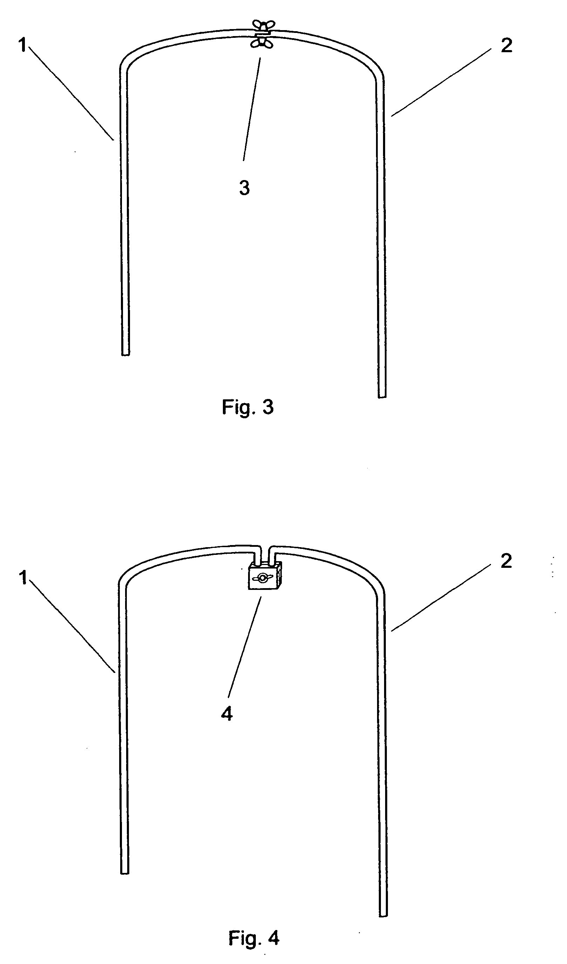

- Fig. 3: die Pflanzenstütze in perspektivischer Ansicht mit Verschraubung;
- Fig. 4: die Pflanzenstütze in der Ausführung mit einem Gelenkstück;
- Fig. 5: ein Verbindungsstück in Aufsicht;
- Fig. 6: die Pflanzenstütze mit einem eingefügtem Verbindungsstück in perspektivischer Ansicht;
- Fig. 7: die Verbindung mit einem Gelenkstück in vergrößerter Ansicht;

Die Stütze ist zweiteilig und besteht aus zwei Metalldrahthaltestäben (1, 2), die rechtwinklig abgebogen sind, wobei der eine Schenkel quer zur Laufrichtung des anderen Schenkels in sich über seine gesamte Teillänge bogenförmig geformt ist. Der Biegradius dieses ein Bogens beträgt einen viertel bis einen halben Kreisumfang. Die gebogenen Schenkel jeweils zweier Metalldrahthaltestäbe sind gegensinnig gekrümmt und werden an ihrem freien Enden mit einer Schraubverbindung (3) verbunden. Dadurch bilden sie einen Teil- bzw. Vollkreis an dessen jeweiligen äußeren Enden die geraden Schenkel rechtwinklig quer abknicken.

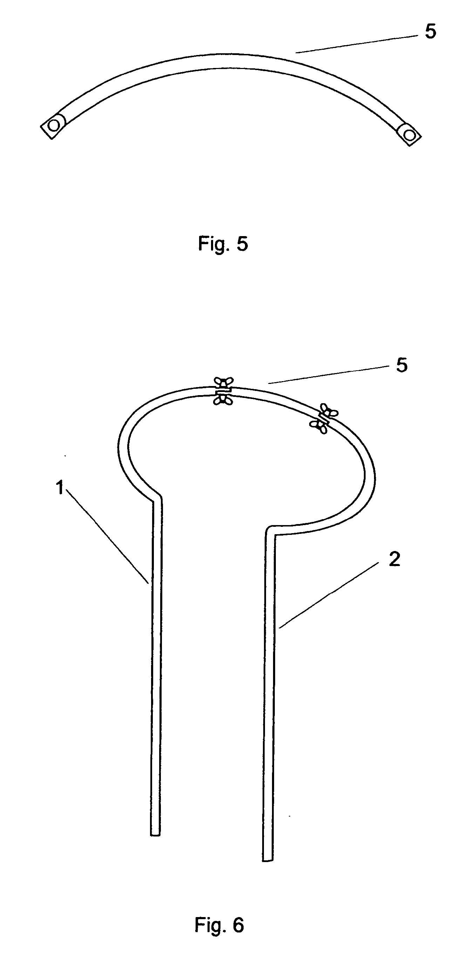

Bei Bedarf können zwischen die Verbindung der Metalldrahthaltestäbe eines oder mehrere bogenförmige Verbindungsstücke (5) eingefügt werden, die den Umfang des aus den Stützen gebildeten Haltekreises vergrößern (Fig. 6).

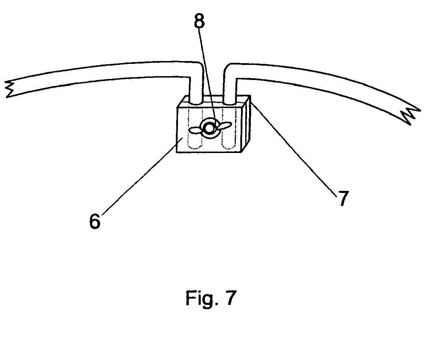

In einer weiteren Ausführung (Fig.4, 7) erfolgt die Verbindung der Enden der Drahtstücke nicht durch Schrauben, sonder durch zweischalige Gelenk- / Scharnierstücke (4), in welche die abgewinkelten Drahtenden eingeschoben werden. Durch Anziehen einer Klemmschraube werden die Halbschalen zusammengepresst und die Drahtenden fixiert.

## Patentansprüche

1. Verstellbare Pflanzenstütze bestehend aus zwei parallel ausgerichteten, rechtwinklig abgewinkelten Metalldrahthaltestäben (1, 2), die an jeweils einem Ende miteinander verbunden sind,
**dadurch gekennzeichnet,**
**dass** die Enden mittels einer Schraubverbindung (3) oder einem Gelenkstück (4) beweglich, durch Anziehen von Klemmschrauben fixierbar, direkt zweiteilig oder **durch** weitere gebogene Verbindungsstücke (5) mehrstückig miteinander verbunden sind.

2. Verstellbare Pflanzenstütze nach Anspruch 1, **dadurch gekennzeichnet,**
**dass** die Metalldrahthaltestäbe (1, 2)
- um 90 Grad abgewinkelt zwei Schenkel bilden;
- ein Schenkel quer zur Längsrichtung des anderen bogenförmig auf seiner gesamten Teillänge gebogen ist, mit einem Biegeradius von einem viertel bis zu einem halben Kreisumfang;
- die Biegungen der gebogenen Schenkel von jeweils zwei Haltestäben gegensinnig sind und sich bei Verbindung an deren freien Enden in der Mitte zu einem Teilkreis fügen, an dessen jeweiligen äußeren Enden quer abgewinkelt die geraden Schenkel beginnen.

3. Verstellbare Pflanzenstütze nach Anspruch 2, **dadurch gekennzeichnet,**
**dass** ein oder mehrere bogenförmige Metalldrahtverbindungsstücke (5) zwischen die gebogenen Schenkel der beiden Metalldrahthaltestäbe mehrteilig eingefügt sind.

4. Verstellbare Pflanzenstütze nach einem der Ansprüche 1 bis 3, **dadurch gekennzeichnet,**
**dass** alle Drahtelemente der Stütze aus biegesteifen Metalldraht bestehen, der
- rostfrei und verwitterungsfest ist
- mit einer Kunststoff-Ummantelung oder -Beschichtung versehen ist.

5. Verstellbare Pflanzenstütze nach einem der Ansprüche 1 bis 4, **dadurch gekennzeichnet,**
**dass** die freien Enden der Schenkel der Metalldrahthaltestäbe und die Enden der bogenförmigen Verbindungsstücke durchbohrt sind und durch eine Flügel/Knebelschraube (3) mit einer Flügel-/Knebelmutter (3) verstellbar und fixierbar verbunden sind.

6. Verstellbare Pflanzenstütze nach einem der Ansprüche 1 bis 4, **dadurch gekennzeichnet,**
**dass** die Metalldraht-Haltestäbe und -Verbindungsstücke an den Verbindungsenden kurz um 90 Grad abgewinkelt sind und dort durch ein Gelenk-/Scharnierstück (4) mit einer Klemmschraube (8) verbunden werden.

7. Verstellbare Pflanzenstütze nach Anspruch 6, **dadurch gekennzeichnet,**
**dass** das Gelenk- /Scharnierstück (4)
- aus zwei Halbschalen (6, 7) aus festem Material besteht;
- die Halbschalen je zwei parallele Führungsnuten aufweisen, welche beim Zusammenfügen zwei runde Öffnungen ergeben, die die Enden der Drahtstäbe aufnehmen;
- mittig eine Bohrung und darin eine Klemmschraube mit Flügel/Knebelmutter (8) aufweisen, die die Halbschalen zur Fixierung der Drahtstäbe zusammenpresst.

## Claims

1. An adjustable plant support consisting of two parallel metal wire supporting rods bent at right angles (1,2) which are connected to one another at each end,
**characterised in that**
the ends are flexibly connected directly, lockable by tightening clamping screws, as two pieces to one another, or via additional curved connecting members (5) as multiple pieces, by means of a screwed connection (3) or by a joint (4).

2. An adjustable plant support as claimed in claim 1 **characterised in that** the metal wire supporting rods (1,2)
- bent at 90° form two legs;
- one leg perpendicular to the longitudinal direction of the other is formed into a curve over its entire length with a bend radius of between a quarter and a half of a circumference;
- the bends of the bent legs of each of two supporting rods are reversed and when connected by their free ends in the middle form a partial circle, at the outside ends of which, bent perpendicularly, the straight legs begin.

3. An adjustable plant support as claimed in claim 2 **characterised in that** one or more curved metal wire connecting members (5) are fitted as multiple pieces between the curved legs of the two metal wire supporting rods.

4. An adjustable plant support as claimed in one of the claims 1 to 3
**characterised in that**
all of the wire elements of the support are of flexural stiff metal wire which is
- rustproof and weather resistant
- fitted with plastic sheathing or is plastic coated

5. An adjustable plant support as claimed in one of the claims 1 to 4
**characterised in that**
the free ends of the legs of the metal wire supporting rods and the ends of the curved connecting members have holes drilled through them and are connected in both an adjustable manner and a lockable manner by means of a wing screw / T-screw (3) with a wing nut / T-nut (3).

6. An adjustable plant support as claimed in one of the claims 1 to 4
**characterised in that**
the metal wire supporting rods and metal wire connecting members are bent over for a short distance at 90° at their connecting ends and are connected there by means of a joint / hinge unit (4) with a clamping screw (8).

7. An adjustable plant support as claimed in claim 6 **characterised in that** the joint / hinge unit (4)
- is constructed of two half shells (6,7) of solid material;
- **in that** the half shells each exhibit two parallel guide grooves which, when placed together result in two round openings to accommodate the ends of the wire rods;
- exhibits a central hole accommodating a clamping screw with wing nut / T-nut (8) which draw the two half shells together in order to secure the wire rods.

## Revendications

1. Support de plante adaptable, composé de deux tiges de fixation en fil métallique, orientées parallèlement, coudées à angle droit (1, 2), assemblées respectivement à un bout,
**caractérisé par le fait,**
**que** les bouts, mobiles au moyen d'un raccord vissé (3) ou d'une pièce d'articulation (4), fixables par le blocage de vis de serrage, assemblés directement en deux parties ou par d'autres raccords cintrés (5) en plusieurs parties.

2. Support de plante adaptable d'après la revendication 1,
**caractérisé par le fait**
**que** les tiges de fixation en fil métallique(1, 2),
- coudées de 90 degrés, forment deux branches;
- une branche transversalement au sens de la longueur de l'autre est courbée sur toute sa longueur partielle avec un rayon de courbure d'un quart jusqu'à une moitié de circonférence ;
- les courbures des branches arquées de respectivement deux bâtons de fixation sont inverses et en cas d'assemblage leurs bouts libres se joignent au milieu pour former un cercle partiel, dont aux bouts extérieurs respectifs coudées transversalement commencent les branches droites.

3. Support de plante adaptable d'après la revendication 2,
**caractérisé par le fait,**
**qu'**un ou plusieurs raccords en fil de fer cintrés (5) soient insérés en plusieurs parties entre les branches arquées des deux tiges de fixation en fil métallique.

4. Support de plante adaptable d'après l'une des revendications 1 jusqu'à 3,
**caractérisé par le fait,**
**que** tous les éléments en fil de fer du support consistent en du fil métallique rigide en flexion
qui est revêtu de manière inoxydable et résistante à l'altération avec un recouvrement ou revêtement en matière plastique.

5. Support de plante adaptable d'après l'une des revendications 1 jusqu'à 4,
**caractérisé par le fait,**
**que** les bouts libres des branches des tiges de fixation en fil métallique et les bouts des raccords cintrés soient percés et assemblés de manière réglable et fixable par une vis papillon/ à garret (3) avec un écrou papillon/ à oreilles (3).

6. Support de plante adaptable d'après l'une des revendications 1 jusqu'à 4,
**caractérisé par le fait,**
**que** les tiges de fixation et raccords en fil métallique soient coudés de façon courte de 90 degrés à leurs bouts d'assemblage et que y soient assemblés par une pièce d'articulation/de charnière (4) avec une vis de serrage (8).

7. Support de plante adaptable d'après la revendication 6,
**caractérisé par le fait,**
**que** la pièce d'articulation/de charnière (4)
- est composée de deux demi-disques (6, 7) en matériau dur;
- les demi-disques présentent deux rainures de guidage parallèles,
- qui forment deux ouvertures rondes lors de l'assemblage, dans lesquelles logent les bouts des tiges en fil métallique ;
- qui présentent au niveau central un perçage et à l'intérieur une vis de serrage avec un écrou papillon/ à oreilles (8), qui serre les demi-disques pour la fixation des tiges en fil métallique.
